Europäisches Patentamt

European Patent Office

Office européen des brevets

(19)

(11) EP 1 482 662 A1

(12) EUROPEAN PATENT APPLICATION

(43) Date of publication:
01.12.2004 Bulletin 2004/49

(51) Int Cl.⁷: H04B 10/155

(21) Application number: 04252937.0

(22) Date of filing: 18.05.2004

(84) Designated Contracting States:
AT BE BG CH CY CZ DE DK EE ES FI FR GB GR
HU IE IT LI LU MC NL PL PT RO SE SI SK TR
Designated Extension States:
AL HR LT LV MK

(30) Priority: 30.05.2003 US 449290

(71) Applicant: LUCENT TECHNOLOGIES INC.
Murray Hill, New Jersey 07974-0636 (US)

(72) Inventors:
• Leuthold, Juerg
Eatontown, New Jersey 07724 (US)
• Liu, Xiang
Marlboro, New Jersey 07746 (US)
• Wei, Xing
New Providence, New Jersey 07974 (US)

(74) Representative:
Watts, Christopher Malcolm Kelway, Dr. et al
Lucent Technologies NS UK Ltd
5 Mornington Road
Woodford Green Essex, IG8 0TU (GB)

(54) **System and method for alternate mark inversion and duobinary optical transmission**

(57)     An optical transmitter is disclosed including a laser source, a modulator for generating a differential phase shift keyed signal, and a delay interferometer having at least one optical input and at least one optical output. The delay interferometer is adapted to provide a time delay of about one bit period. Also disclosed is a method of transmitting alternate mark inversion and/or duobinary signals. The method includes the steps of providing a differential phase shift keyed signal, inputting the differential phase shift keyed signal into a delay device adapted to split the differential phase shift keyed signal into at least two signals on at least two arms and to delay the signal on at least one arm by about one bit period, and coherently combining the signals on the arms to produce alternate mark inversion and/or duobinary signals.

FIG. 1

## Description

### Field of the Invention

The present invention relates to optical communications, and more specifically to a system and method for generating alternate mark inversion and duobinary signals for optical communication systems.

### Background of the Invention

Alternate mark inversion (AMI) is a well-known modulation format that has been used in radio and cable communications. It is also referred to as bipolar signaling. In today's commercial optical transmission systems, the most commonly used modulation formats are non-return-to-zero (NRZ), return-to-zero (RZ), and carrier-suppressed return-to-zero (CSRZ). Recently, AMI has attracted much attention for its potential to extend the reach of high-speed (e.g., 40 Gb/s) long haul optical transmission systems. AMI signaling was found to be efficient in reduction of the undesired pulse-to-pulse interaction in dispersion-managed systems. In particular, it has been shown that the "ghost pulse" that arises from intra-channel four wave mixing can be greatly suppressed. Such AMI signaling is discussed in X. Liu, *et al.*, "Suppression of intrachannel four-wave-mixing-induced ghost pulses in high speed transmissions by phase inversion between adjacent marker blocks", Optics Letters, Vol. 27, p. 1177-1179 (2002), which is incorporated herein by reference.

Duobinary is a modulation format that is known to have superior properties such as reduced signal bandwidth and improved chromatic dispersion tolerance.

Prior art devices have proposed using a delay interferometer on the receiver side of a DPSK transmission system to convert a DPSK signal to a duobinary or AMI signal in front of the photodetector. Such devices, however, require either polarization-insensitive interferometers or polarization controllers to control the signal polarization on the receiver side since the transmitted signal usually suffers from polarization mode dispersion from the transmission fiber and the polarization appears to be random on the receiver side. Using an interferometer on the receiver side also requires a more complex feedback circuit to fine-tune the delay interferometer to remotely track the transmitter laser frequency.

Other prior art devices propose methods for generating multi-wave-length duobinary-carrier-suppressed RZ signals at the transmitter side of an optical transmission system. However, such devices propose the use of a delay interferometer with a time delay of only a small fraction of one bit period (e.g. 10 ps for a data rate of 42.7 Gb/s). Such a device with a fractional bit delay cannot generate duobinary signals, and also suffers high insertion loss due to the short delay.

### Summary of the Invention

The present invention provides a system and method for generating optical AMI and duobinary signals on the transmitter side of an optical transmission system using an optical delay interferometer or other similar delay device.

According to one embodiment, an optical transmitter is provided which includes a laser source, a modulator for generating a differential phase shift keyed signal, and a delay interferometer having at least one optical input and at least one optical output. The delay interferometer is adapted to provide a time delay of about one bit period to convert the differential phase shift keyed signal to an AMI or duobinary signal.

In an embodiment of the method of the invention for transmitting alternate mark inversion and/or duobinary signals, a differential phase shift keyed signal is provided and input into a delay device adapted to split the differential phase shift keyed signal into two signals on two arms and to delay the signal on one arm by about one bit period. The signals on the two arms are then coherently combined to produce alternate mark inversion and/or duobinary signals.

### Brief Description of the Drawing

Fig. 1 is a diagram depicting one embodiment of a duobinary transmitter according to the invention;

Fig. 2 is a plot showing the transfer function of a Mach-Zehnder modulator, which can be used in accordance with embodiments of the invention;

Fig. 3 is a diagram depicting one embodiment of a delay interferometer, which can be used with the present invention;

Fig. 4 is a plot illustrating the conversion of a DPSK signal to a duobinary or AMI signal;

Fig. 5 is an eye diagram of a 40 Gb/s AMI signal generated according to an embodiment of the method of the invention;

Fig. 6 is an eye diagram of a 40 Gb/s duobinary signal generated according to an embodiment of the method of the invention;

Fig. 7 is a plot showing the optical power spectra of AMI (solid line) and duobinary (dashed line) signals generated according to an embodiment of the method of the invention.

### Detailed Description of the Invention

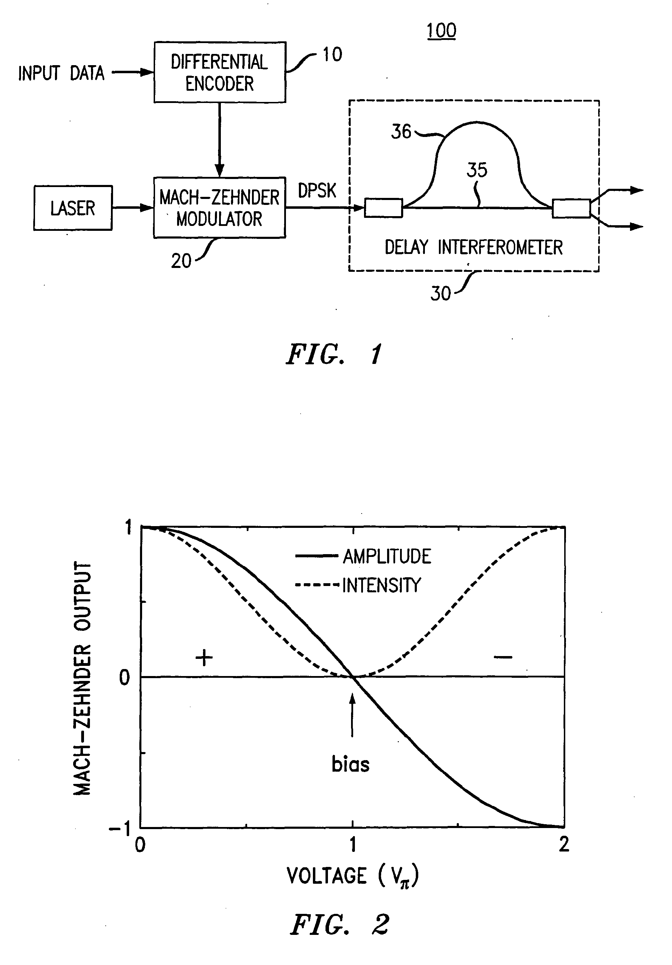

The AMI and duobinary transmitter of one embodiment of the transmitter 100 of invention is illustrated in Fig.1. As shown in Fig. 1, a differential phase shift keying (DPSK) signal is generated with a differential encoder 10 and a Mach-Zehnder modulator 20. The Mach-Zehnder modulator 20 can be made from a variety of electro-optic materials, for example, LiNbO₃. The modulator 20 is preferably biased at its null point to switch the phase of the light signal between 0 and π, as illustrated in Fig.2. Alternatively, a single-waveguide phase modulator can also be used for the phase modulation. A Mach-Zehnder modulator is preferred because it produces the DPSK signal with no frequency chirp. The electronic control signal of the modulator is preferably differentially encoded such that the relative phase between two adjacent optical pulses corresponds to the input data. For example, the same phase corresponds to a digital "1" and the opposite phase corresponds to a digital "0" (or vise-versa).

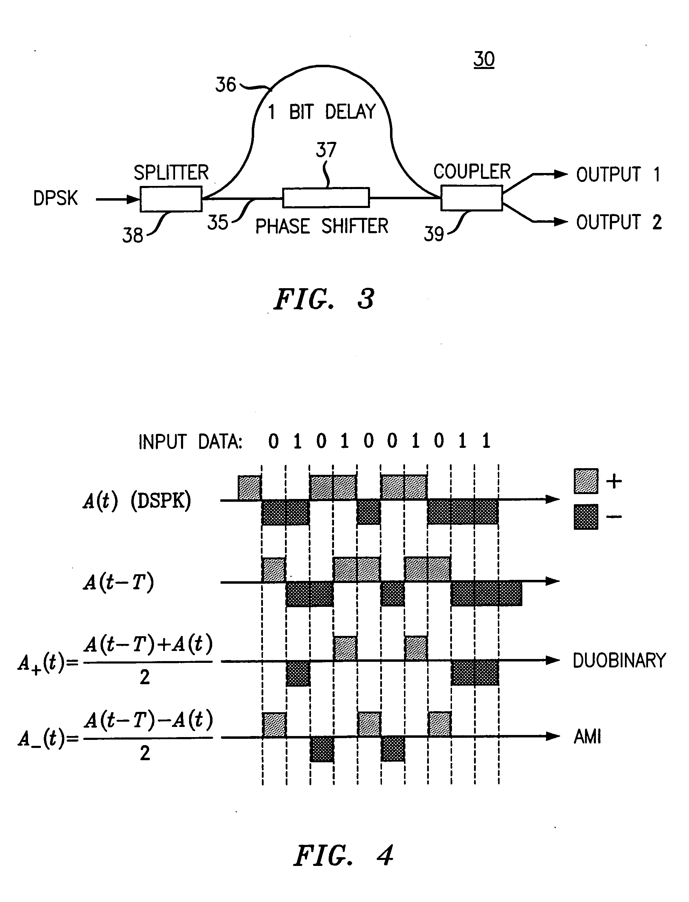

An optical delay interferometer 30, also shown in Fig. 3, is preferably used to split the light signal into two arms 35, 36, and delay one arm 36 by about one bit period. It can be understood by those skilled in the art that the delay provided by the delay interferometer 30 can vary from precisely one bit period and still provide sufficient delay to produce AMI or duobinary signals according to the invention. Preferably, the delay provided by the delay interferometer is between about 0.8 and about 1.2 times the bit period. For example, if the bit rate is 40 Gb/s, the delay would be about T = 25 ps. The optical signals in the two arms 35,36 are preferably then coherently combined with a coupler 39.

Such a delay interferometer 30 can be fabricated by various techniques such as silicon optical bench (SiOB) technology. Other techniques, which can be used, employ other materials such as silica fiber, InP waveguides, plastic waveguides, and the like. Modifications of the delay interferometer 30 may include one or more phase shifters 37 on one or both arms 35, 36, absorbing or active gain elements (not shown) in one or both arms 35, 36 to adapt power levels on the arms 35, 36 or to have additional couplers (not shown) on one or both of the arms 35, 36 for monitoring purposes. As an example, for monitoring purposes, light can be split off from one or more of the arms 35, 36. Alternatively, light can be split off from one or more of the arms 35, 36 that are not used and guided into a photodiode (not shown). By simply measuring the average power in the, it is possible to gain information about the quality of a generated signal. This information can then be used within a feedback mechanism to tune the transmitter for a desired performance. If further filtering and/or fast photodetectors are used in one or both outputs of the delay interferometer 30 the signal qualities can also be controlled to a higher degree and feedback to the transmitter can be optimized with great precision.

In one aspect of the invention, the optical fields in the two arms 35, 36 of the interferometer 30 can be described as

$$A_1(t) = \frac{1}{\sqrt{2}} A(t - T)$$

for the delayed arm 36, and

$$A_2(t) = \frac{1}{\sqrt{2}} A(t)$$

for the non-delayed arm 35, where $A(t)$ is the amplitude of the DPSK light signal at the input of the delay-line interferometer 30.

By fine-tuning of the phase shifter 37, the coupler 39 of the interferometer 30 can perform add and/or subtract operations on the two fields and output the result to one or more output ports (e.g., a constructive output port, output 1, and a destructive output port, output 2). The output at the "constructive port" can be expressed as

$$A_+(t) = \frac{A_1(t) + A_2(t)}{\sqrt{2}} = \frac{A(t - T) + A(t)}{2},$$

and the output at the "destructive port" can be expressed as

$$A_-(t) = \frac{A_1(t) - A_2(t)}{\sqrt{2}} = \frac{A(t - T) - A(t)}{2}.$$

The output $A_+(t)$ is a duobinary signal while the other output $A_-(t)$ is an AMI signal.

Figure. 4 is a graphic illustration of input and output signals of an exemplary embodiment of the invention with an input data sequence of 0101001011. A (t) represents the amplitude of the DPSK signal, and $A(t - T)$ represents the same signal with a one-bit time delay. $A_+(t)$ and $A_-(t)$ are the amplitudes of the two outputs of the delay-line interferometer 30. In this example, $A_+(t)$ is a duobinary signal and $|A_+(t)|^2$ corresponds to the original input data, while $A_-(t)$ is an AMI signal and $|A_-(t)|^2$ corresponds to the inverted input data.

Although prior art systems have proposed using a one-bit-delay interferometer at the receiver side of a DPSK transmission system to convert a DPSK signal to a duobinary (or AMI) signal in front of the photodetector, a one-bit delay interferometer has not been used on the transmitter side to produce duobinary and AMI signals for transmission. Using a delay interferometer on the transmitter side according to embodiments of the invention has many advantages over the DPSK transmission scheme with an interferometer on the receiver side. One such advantage is that a polarization-sensitive interferometer can still be used because the polarization of the signal can be well maintained by polarization-maintaining fibers (PMF) or polarization controllers on the transmitter side. This is not the case at the receiver side, where the polarization of the signal suffers from polarization mode dispersion (PMD) from the transmission fiber and changes over time. Another advantage of using an interferometer at the transmitter side is that by transmitting one output signal from the two outputs of the interferometer the average optical power in the transmission fiber is reduced. Lower optical power may lead to cost savings on optical amplifiers. Lower optical power also has the potential benefit of suppressing undesired nonlinear penalties from cross phase modulation (XPM) and four wave mixing (FWM).

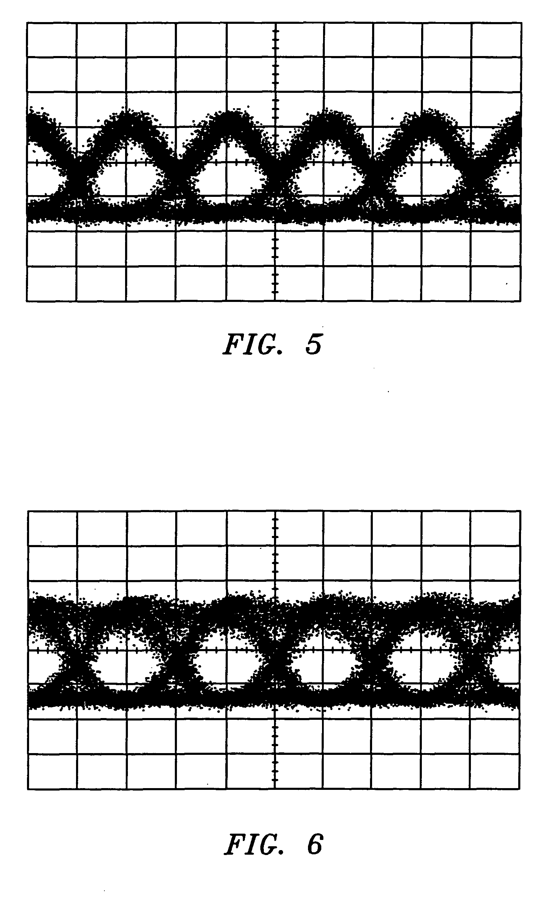

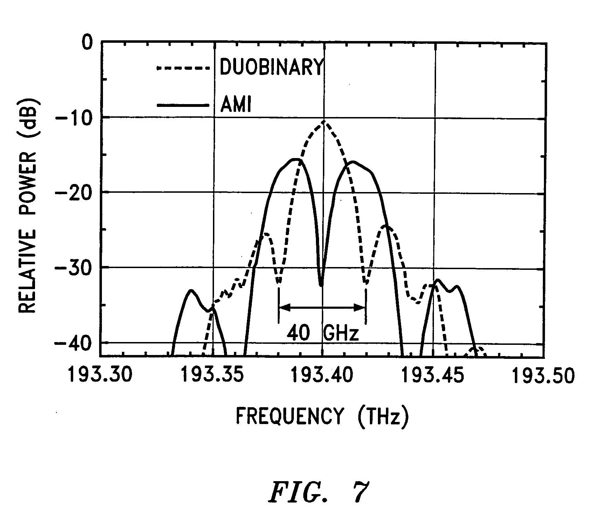

An embodiment of the method of the invention has been demonstrated experimentally at 40 Gb/s. Back-to-back eye diagrams of the AMI and duobinary signals generated by such experiment are shown in Fig. 5 and Fig. 6. The optical power spectra of these signals are shown in Fig. 7. The experiment was conducted with a continuous wave (CW) laser input source. If a synchronized optical pulse source is used, return-to-zero (RZ) duobinary and AMI signals with smaller duty cycles are produced. The results of the experiment are published in X. Wei, et al., "40 Gb/s duobinary and modified duobinary transmitter based on an optical delay interferometer", Proceedings of the European Conference on Optical Communication, Sept. 8-12, 2002, ECOC'02, paper 9.6.3, which is incorporated herein by reference. (Note: the AMI signals discussed in this publication by X. Wei, et al were referred to as "modified duobinary" signals).

Various additional modifications of this invention will occur to those skilled in the art. All deviations from the specific teachings of this specification that basically rely on the principles and their equivalents through which the art has been advanced are properly considered within the scope of the invention as described and claimed.

**Claims**

1. An optical transmitter comprising:

   a laser source;
   a modulator for generating a differential phase shift keyed signal; and
   a delay interferometer including at least one optical input, at least one optical output, and being adapted to provide a time delay of about one bit period.

2. The optical transmitter of claim 1 wherein the relative phase of the two arms of the delay interferometer is adjusted such that the input differential phase shift keyed signal is converted to an alternate mark inversion signal.

3. The optical transmitter of claim 1 wherein the relative phase of the two arms of the delay interferometer is adjusted such that the input differential phase shift keyed signal is converted to a duobinary signal.

4. The optical transmitter of claim 1 wherein the time delay of the delay interferometer is between about 0.8 and about 1.2 times the bit period.

5. An optical transmission system comprising:

   an optical transmitter including a delay interferometer adapted to provide a time delay of about one bit period such that an alternate mark inversion and/or duobinary signal are generated at an output of the interferometer.

6. An optical transmitter comprising:

   a differential phase shift keying modulator for generating a differential phase shift keyed signal; and
   a delay device adapted to provide a delay of about one bit period;

   wherein the delay device converts the differential phase shift keyed signal to an alternate mark inversion and/or duobinary signals.

7. The transmitter of claim 6 further comprising a differential encoder.

8. The transmitter of claim 6 wherein the modulator is biased at its null point to switch the phase of a light signal generated therefrom between 0 and $\pi$.

9. The transmitter of claim 6 wherein a control signal for the modulator is differentially encoded such that the relative phase between adjacent pulses generated from the modulator corresponds to input data.

10. The transmitter of claim 6 wherein the delay device includes a splitter for splitting the differential phase shift keyed signal onto at least two arms, and wherein the signal in at least one arm is delayed by about one bit period.

11. A method of transmitting alternate mark inversion and/or duobinary signals comprising the steps of:

   providing a differential phase shift keyed signal;
   inputting the differential phase shift keyed signal into a delay device adapted to split the differential phase shift keyed signal into at least two signals on at least two arms and to delay the signal on at least one arm by about one bit period;
   coherently combining the signals on the at least two arms to produce alternate mark inversion and/or duobinary signals.

100

INPUT DATA → DIFFERENTIAL ENCODER — 10

LASER → MACH-ZEHNDER MODULATOR → DPSK

20

DELAY INTERFEROMETER

36

35

30

## FIG. 1

MACH-ZEHNDER OUTPUT

1

0

-1

+ —

bias

0        1        2

VOLTAGE ($V_\pi$)

—— AMPLITUDE
---- INTENSITY

## FIG. 2

<u>30</u>

36 ⌒

1 BIT DELAY

37

SPLITTER

DPSK →

COUPLER → OUTPUT 1

→ OUTPUT 2

38 ⌒

35 ⌒ PHASE SHIFTER

39 ⌒

## FIG. 3

INPUT DATA: 0 1 0 1 0 0 1 0 1 1

$A(t)$ (DSPK)

□ +
□ −

$A(t-T)$

$A_+(t) = \dfrac{A(t-T)+A(t)}{2}$ → DUOBINARY

$A_-(t) = \dfrac{A(t-T)-A(t)}{2}$ → AMI

## FIG. 4

FIG. 5

FIG. 6

FIG. 7

## EUROPEAN SEARCH REPORT

**European Patent Office**

**Application Number**

EP 04 25 2937

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | WEI X ET AL: "40 Gb/s DUOBINARY AND MODIFIED DUOBINARY TRANSMITTER BASED ON AN OPTICAL DELAY INTERFEROMETER" ECOC 2002. 28TH. EUROPEAN CONFERENCE ON OPTICAL COMMUNICATION. COPENHAGEN, DENMARK, SEPT. 8 - 12, 2002, EUROPEAN CONFERENCE ON OPTICAL COMMUNICATION.(ECOC), vol. VOL. 4 OF 4. CONF. 28, 12 September 2002 (2002-09-12), page 963, XP001158429 * page 963, right-hand column, line 4 - line 30; figure 1 * ----- | 1-11 | H04B10/155 |
| X | EP 1 271 808 A (NIPPON TELEGRAPH & TELEPHONE) 2 January 2003 (2003-01-02) * paragraphs [0052], [0093] - [0096]; figures 3,14,15A-F * ----- | 1-11 | |

**TECHNICAL FIELDS SEARCHED (Int.Cl.7)**

H04B

The present search report has been drawn up for all claims

| Place of search | Date of completion of the search | Examiner |
|---|---|---|
| The Hague | 31 August 2004 | Cochet, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 482 662 A1

## ANNEX TO THE EUROPEAN SEARCH REPORT
## ON EUROPEAN PATENT APPLICATION NO.

EP 04 25 2937

This annex lists the patent family members relating to the patent documents cited in the above-mentioned European search report.
The members are as contained in the European Patent Office EDP file on
The European Patent Office is in no way liable for these particulars which are merely given for the purpose of information.

31-08-2004

| Patent document cited in search report | | Publication date | Patent family member(s) | | Publication date |
|---|---|---|---|---|---|
| EP 1271808 | A | 02-01-2003 | JP | 2003087201 A | 20-03-2003 |
| | | | CN | 1394005 A | 29-01-2003 |
| | | | EP | 1271808 A2 | 02-01-2003 |
| | | | US | 2003002121 A1 | 02-01-2003 |

For more details about this annex : see Official Journal of the European Patent Office, No. 12/82

EPO FORM P0459

10